# EUROPÄISCHE PATENTSCHRIFT

(11) **EP 0 517 656 B1**
(45) Veröffentlichungstag und Bekanntmachung des Hinweises auf die Patenterteilung: **20.08.1997**
(21) Anmeldenummer: 92810398.5
(22) Anmeldetag: 26.05.1992
(51) Int. Cl.: C08G 73/12, C08L 79/08, C08K 5/3415

(54) **Brandgeschütztes Polyimid-System**
Fire-protected polyimide composition
Composition de polyimide ignifuge

(30) Priorität: 03.06.1991 US 709905
(43) Veröffentlichungstag der Anmeldung: 09.12.1992
(73) Patentinhaber: Ciba Specialty Chemicals Holding Inc., 4057 Basel (CH)
(72) Erfinder: Gong Chin, Benjamin, Croton-on-Hudson, NY 10520 (US); Tietze, Roger, Baldwin, NY 11510 (US)

(56) Entgegenhaltungen:
- EP-A- 0 424 135
- FR-A- 2 156 390
- US-A- 4 100 140
- US-A- 4 371 719

## Beschreibung

Es ist bekannt, dass Polymaleinimide zur Herstellung verschiedener Polyadditions- und Polymerisationsprodukte verwendet werden können. Besonderes Augenmerk liegt hierbei auf Bismaleinimidmaterialien, die sowohl thermische Stabilität als auch gute mechanische Eigenschaften zeigen und daher oftmals für hochwertige Verbundmaterialien eingesetzt werden, z. B. für Schaltungsplatinen in der Elektronik (electronic circuit boards).

Die derzeit verwendeten Bismaleinimid-Systeme enthalten Alkenylphenole als Koreaktanden. In den U.S.-Patenten mit den Nummern 4,100,140; 4,127,615; 4,130,600 und 4,131,632 sind Polymere beschrieben, die durch Reaktion von Polymaleinimiden mit Alkenylphenolen oder Alkenylphenolethern, gegebenenfalls in Gegenwart von Epoxidharzen, erhalten werden können.

Die EP-A-0 393 550 beschreibt weiterhin Polyimidzusammensetzungen, die ein Bismaleinimid und ein Alkenylphenol enthalten, und weist darauf hin, dass diesen Zusammensetzungen Phenothiazin als Inhibitor zugesetzt werden kann.

Die EP-A-0 424 135 beschreibt die Verwendung von Tribromphenylmaleinimid zur Herstellung flammwidriger (Klasse VO nach UL94) Polyimidzusammensetzungen.

Ein üblicher Polyimid-Prepreg für Platinenanwendungen basiert auf Bismaleinimidodiphenylmethan und Diallylbisphenol-A. Dies Produkt muss normalerweise gekühlt gelagert werden aufgrund der Instabilität und des zu starken Härtungsfortganges bei höheren Temperaturen. Ausserdem entspricht es nicht der Stufe "VO" der Klassifizierung des "Underwriters Laboratory" für kommerziell vertriebene brandgeschützte Produkte ("Underwriters Laboratory VO reqirement for commercial flame retardency").

Es ist daher das primäre Ziel der vorliegenden Erfindung, ein brandgeschütztes Polyimidharz-System zur Verfügung zu stellen, das diese Nachteile der Materialien des Standes der Technik im wesentlichen eliminiert. Ein weiteres Ziel ist es, ein brandgeschütztes Polyimidharzsystem mit diesen Eigenschaften zur Verfügung zu stellen, ohne dabei wesentliche Nachteile in Bezug auf die thermischen und mechanischen Eigenschaften in Kauf nehmen zu müssen. Ausserdem soll ein brandgeschütztes Polyimidharz-System von verbesserter Löslichkeit zur Verfügung gestellt werden, das stabile Lösungen bildet und gut lagerfähig ist.

Es wurde nunmehr gefunden, dass die Zugabe von Tribromphenylmaleinimid zu Polyimidsystemen entsprechend der vorliegenden Erfindung brandschützend wirkt, ohne die Verarbeitungsparameter und die thermischen, mechanischen, chemischen oder elektrischen Eigenschaften der daraus erhaltenen Produkte negativ zu beeinflussen. Insbesondere liefern die erfindungsgemässen Polyimidharz-Systeme ausserdem Prepregs mit wesentlich verbesserter Lagerstabilität. So ermöglichen die brandgeschützten Polyimidharzsysteme gemäss der Erfindung die Herstellung von Prepregs, die bei Raumtemperatur ohne negativen Effekt auf die Weiterverarbeitung gelagert werden können.

Überraschenderweise beeintächtigt die Zugabe von Tribromphenyl-maleinimid nicht die Verarbeitungscharakteristik der Polyimidharz-Systeme. Beispielsweise wird die ausgedehnte Topfzeit der erfindungsgemässen Harzsysteme nicht beeinflusst, was zu verbesserter Verarbeitbarkeit auch von Produkten daraus, insbesondere von Prepregs, führt. Der Restgehalt des Prepregs an flüchtigen Bestandteilen ist unverändert, und die verminderte Härtungsrate des Harzsystems bleibt unbeeinflusst. Entsprechend bieten die erfindungsgemässen brandgeschützten Polyimidharz-Systeme verbesserte Auftrags- und Verarbeitungseigenschaften und ermöglichen die Herstellung von Material ebenfalls höherer Qualität.

Die vorliegende Erfindung betrifft daher eine Polyimidzusammensetzung enthaltend:
(A) das Reaktionsprodukt von
   (a) einem Polyimid enthaltend zumindest zwei Reste der Formel 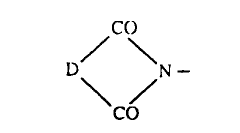 worin D ein zweiwertiger Rest mit einer Kohlenstoff-Kohlenstoff-Doppelbindung ist,
   (b) 0,05 to 2,0 Mol pro Mol der Komponente (a) eines Alkenylphenols, eines Alkenylphenolethers oder von Gemischen der beiden und
   (c) Tribromphenyl-maleinimid;
(B) einen Katalysator für die ionische oder radikalische Polymerisation und
(C) Phenothiazin oder ein Derivat (wie im Anspruch 1 definiert) davon.

Geeignete Polyimide enthalten zumindest zwei Reste der Formel 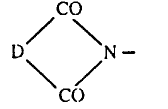 worin D ein zweiwertiger Rest mit einer Kohlenstoff-Kohlenstoff-Doppelbindung ist. Derartige Polyimide sind bekannt und beispielsweise im U.S.-Patent Nr. 4,100,140 beschrieben.

Es handelt sich vorzugsweise um Polyimide der Formel 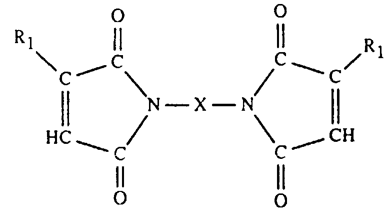 worin R₁ Wasserstoff oder Methyl und X ein zweiwertiger organischer Rest mit 2-30 Kohlenstoffatomen, insbesondere -CₓH₂ₓ- mit x=2-20, -CH₂CH₂SCH₂CH₂-, Phenylen, Naphthylen, Xylylen, Cyclopentylen, 1,5,5-Trimethyl- 1,3-cyclohexylen, 1,4-Cyclohexylen, 1,4-Bis(methylene)-cyclohexylen oder eine Gruppe der folgenden Formel 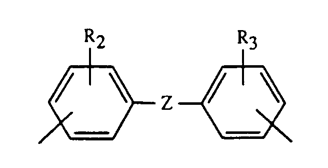 ist, worin R₂ und R₃ unabhängig voneinander Chlor, Brom, Methyl, Ethyl oder Wasserstoff bedeuten und Z eine direkte Bindung oder Methylen, 2,2-Propyliden, -CO-, -O-, -S-, -SO- oder -SO₂- bedeutet. Bismaleinimide dieser Art, wo R₁ Wasserstoff und X Hexamethylen, Trimethylhexamethylen, 1,5,5-Trimethyl- 1,3-cyclohexylen, oder -ganz besonders bevorzugt- eine Gruppe der zuletzt genannten Formel ist, worin Z Methylen, 2,2-Propyliden oder -O- ist, sind besonders bevorzugt.

Die folgenden Verbindungen seien als spezifische Beispiele bekannter Polyimide angeführt, die sich gut für die Erfindung eignen: N,N'-Ethylen-bismaleinimide, N,N'-Hexamethylen-bismaleinimide, N,N'-m-Phenylen-bismaleinimide, N,N'-p-Phenylen-bismaleinimid, N,N'-4,4'-Diphenylmethan-bismaleinimid (besonders bevorzugt angewandt), N,N'-4,4'-3,3'-Dichloro-diyhenylmethan-bismaleinimid, N,N'-4,4'-Diphenylether-bismaleinimid, N,N'-4,4'-Diphenylsulphone-bismaleinimid, N,N'-4,4'-Dicyclohexylmethan-bismaleinimid, N,N'-α,α'-4,4'-Dimethylencyclohexan-bismaleinimid, N,N'-m-Xylylen-bismaleinimid, N,N'-p-Xylylen-bismaleinimid, N,N'-4,4'-Diphenylcyclohexan-bismaleinimid, N,N'-m-Phenylen-bisitraconimid (Citraconsäure = Methylmaleinsäure), N,N'-4,4'-Diphenylmethan-bisitraconimid, N,N'-4,4'-2,2-Diphenylpropan-bismaleinimid, N,N'-α,α'-1,3-Dipropylen-5,5-dimethylhydantoin-bismaleinimid N,N'-4,4'-Diphenylmethane-bisitaconimid (Itaconsäure = CH₂=C(CO₂H)CH₂CO₂H), N,N'-p-Phenylen-bisitaconimid, N,N'-4,4'-Diphenylmethan-bis(dimethylmaleinimd), N,N'-4,4'-2,2'-Diphenylpropan-bis(dimethylmaleinimid), N, N'-Hexamethylen-bis (dimethylmaleinimid), N,N'-4,4'-Diphenylether-bis(dimethylmaleinimid) and N,N'-4,4'-Diphenylsulphone-bis(dimethylmaleinimid).

Als Alkenylphenole oder Alkenylphenolether werden erfindungsgemäss Allylphenole und Methallylphenole sowie deren Ether bevorzugt. Sowohl einkernige als auch mehrkernige, bevorzugt zweikernige Alkenylphenole und Alkenylphenolether können eingesetzt werden. Bevorzugt enthält ausserdem zumindest ein Ring sowohl eine Alkenyl- als auch eine phenolische, gegebenenfalls veretherte OH-Gruppe.

Wie bekannt, werden Alkenylphenole durch Umlagerung der entsprechenden Alkenylether der Phenole (z. B. des Phenolallylethers) unter dem Einfluss von Wärme hergestellt (Claisenumlagerung). Die hierzu erforderlichen Alkenylether werden ebenfalls nach bekannten Verfahren durch Reaktion der entsprechenden Phenole beispielsweise mit den entsprechenden Allylchloriden in Gegenwart von Alkali und Lösungsmittel erhalten. Wie bekannt findet hierbei Kondensation unter Eliminierung von Alkalichlorid statt.

Typische Beispiele sind:

Verbindungen der Formel I 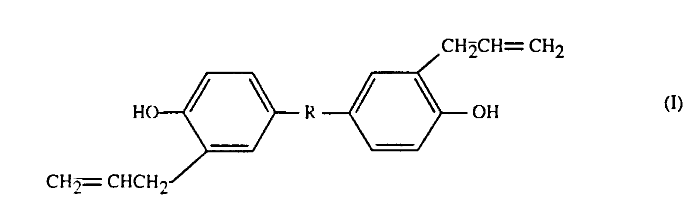 worin R eine direkte Bindung, Methylen, Isopropyliden, -O-, -S-, -SO- oder -SO₂ ist,

Phenole der Formel II 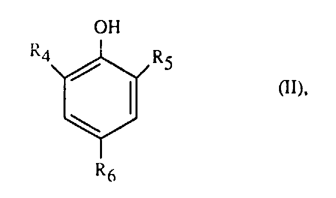 worin R₄, R₅ und R₆ jedes unabhängig voneinander Wasserstoff oder C₂-C₁₀-Alkenyl, bevorzugt Allyl oder insbesondere Propenyl bedeuten, jedoch mindestens eine Gruppe von R₄ bis R₆ eine Alkenylgruppe ist, bevorzugt eine Propenylgruppe;

Verbindungen der Formel III 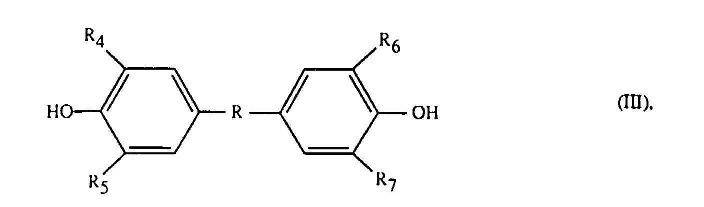 worin R₄, R₅, R₆, and R₇ jedes unabhängig voneinander Wasserstoff oder C₂-C₁₀-Alkenyl, bevorzugt Allyl oder Propenyl bedeuten, jedoch mindestens eine Gruppe von R₄ bis R₇ eine Alkenylgruppe ist, bevorzugt eine Propenylgruppe, und R wie in Formel I definiert ist,

Verbindungen der Formel IV 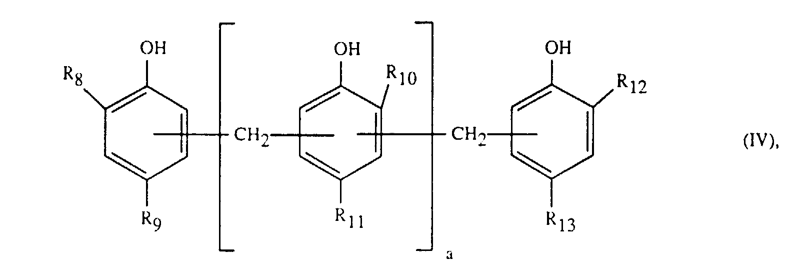 worin R₈, R₉, R₁₀, R₁₁, R₁₂ und R₁₃ jedes unabhängig voneinander Wasserstoff, C₁-C₄-Alkyl oder C₂-C₁₀-Alkenyl, bevorzugt Allyl oder Propenyl bedeuten, jedoch mindestens eine Gruppe von R₈ bis R₁₃ eine Alkenylgruppe ist, bevorzugt eine Propenylgruppe, und a einen Wert von 0 bis 10 hat.

Verbindunben der Formel III sind bevorzugt, worin sowohl R₄ als auch R₆ eine Propenylgruppe, sowohl R₅ als auch R₇ Wasserstoff darstellen und R Methylen, Isopropyliden oder -O- ist.

Es ist auch möglich Gemische von isomeren propenyl- oder allylsubstituierten Mono- oder Polyphenolen zu verwenden. Von den Isomerengemischen sind Gemische von propenyloder allylsubstituierten Phenolen der Formel III bevorzugt, besonders solche, erhalten durch partielle Isomerisierung von allylsubstituierten Phenolen der Formel III a 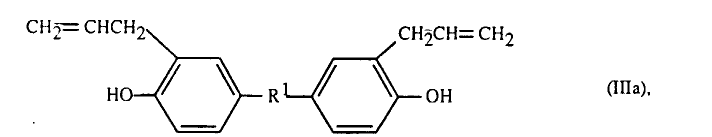 worin R¹ Methylen, Isopropyliden oder -O- ist.

Auch der Einsatz von Gemischen mehrkerniger Alkenylphenole und/oder Alkenylphenolether mit einkernigen Alkenylphenolen und/oder Alkenylphenolethern ergibt gute Ergebnisse.

Die bevorzugt eingesetzten Alkenylphenolether sind jene Verbindungen, die sich von den Alkenylphenolen der oben genannten Formeln ableiten, insbesondere denen der Formeln II, III, und IV, und eine oder mehrere Reste der Formel V aufweisen

-O-R₃ (V)

in der R₃ eine Alkylgruppe mit 1 bis 10 C Atomen, eine Arylgruppe, insbesondere mit 6 bis 10 C Atomen oder eine Alkenylgruppe, insbesondere Allyl oder Methallyl, bedeutet und das O Atom in Formel V die phenolische Etherbrücke representiert.

Eine bevorzugte Ausführungsform stellen erfindungsgemässe Zusammensetzungen dar, bei denen die Alkenylphenole oder Ether der Alkenylphenole als Alkenylgruppen Allyl- oder Propenylgruppen aufweisen.

Nach einer weiteren Ausführungsform der Erfindung werden Gemische solcher Verbindungen, die nur eine OH-Gruppe und nur eine Alkenylgruppe am aromatischen Ring tragen, mit Verbindungen, die mehrere OH-Gruppen und/oder Alkenylgruppen am aromatischen Kern aufweisen, verwendet, oder aber Gemische der Phenolether entsprechender Verbindungen. Auch die entsprechenden Methallylverbindungen können eingesetzt werden.

Alkenylsubstituierte Phenole und Polyole sind z. B. in den U.S.-Patenten 4,100,140 und 4,371,719 beschrieben.

Typische Materialien enthalten O,O'-Diallyl-bisphenol-A, was speziell bevorzugt ist, 4,4'-Dihydroxy-3,3'-diallyldiphenyl, Bis(4-hydroxy-3-allylphenyl)methan, 2,2-Bis(4-hydroxy-3,5-diallylphenyl)propan, Eugenol (= 5-Allylguaiacol), O,O'-Dimethallyl-bisphenol-A, 4,4'-Dihydroxy-3,3'-dimethallyldiphenyl, Bis(4-hydroxy-3-methallylphenyl)methan, 2,2-Bis(4-hydroxy-3,5-dimethallylphenyl)-propan, 4-Methallyl-2-methoxyphenol, 2,2-Bis(4-methoxy-3-allylphenyl)propan, 2,2-Bis(4-methoxy-3-methallylphenyl)propan, 4,4'-Dimethoxy-3,3'-diallyldiphenyl, 4,4'-Dimethoxy-3,3'-dimethallyldiphenyl, Bis(4-methoxy-3-allylphenyl)methan, Bis(4-methoxy-3-methallylphenyl)methan, 2,2-Bis(4-methoxy-3,5-diallylphenyl)propan, 2,2-Bis(4-methoxy-3,5-dimethallylphenyl)propan, 4-Allylveratrol (Veratrole = Dimethoxybenzole) und 4-Methallyl-veratrol.

Die Alkenylphenolkomponente oder ein entsprechendes Gemisch wird in einer Menge von 0,05 bis 2 Mol pro Mol Maleinimid verwendet, bevorzugt in einer Menge von 0,1 to 1,0 Mol pro Mol Maleinimid, und insbesondere in einem Molverhältnis zu Maleinimid von 1:1.

Das Tribromphenyl-maleinimid der Formel VI 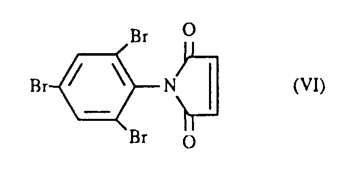 gibt den Zusammensetzungen der vorliegenden Erfindung die Brandschutzeigenschaften, während es die thermischen, mechanischen, chemischen und elektrischen Eigenschaften der Produkte daraus nicht negativ beeinflusst. Das Tribromphenyl-maleinimid ist üblicherweise anwesend in einer Menge von 1 bis 25 %, bevorzugt von 8 bis 15 %, bezogen auf das gesamte Gewicht der Komponente (A).

Das Reaktionsprodukt, das man bei Verwendung des Tribromphenyl-maleinimids erhält, ist einheitlich. weil das brandschützende Halogen voll in das Polymerennetzwerk einreagiert ist. Bekannte Arbeitsweisen umfassen zwar die Zugabe von Flammhemmern zu Polyimidformulierungen, aber typischerweise sind diese Flammhemmer nicht voll in den Polymeren einreagiert. Daher müssen Verarbeitungseigenschaften geopfert werden. Beispielsweise können bromierte Epoxidverbindungen oder Phenole zu Polyimidharzen zugegeben werden, sie schwächen jedoch die thermischen Eigenschaften eines Polyimidverbund- bzw. -compositematerials. Das Reaktionsprodukt aus Bismaleinimid, Allylphenol und Tribromphenyl-maleinimid weist jedoch ausgezeichnete brandhemmenden Eigenschaften auf und behält alle Verarbeitungseigenschaften eines üblichen Polyimidharz-Systems bei.

Das Harzsystem enthält ausserdem Katalysatoren für die ionische oder radikalische Polymerisation. Diese sollten in einer Konzentration von 0,1 bis 10 Gewichtsprozent, bevorzugt 0,1 bis 5 Gewichtsprozent, bezogen auf die Gesamtmenge der Reaktanten, vorhanden sein.

Unter den für die Erfindung geeigneten ionischen Katalysatoren sind primäre, sekundäre und tertiäre Amine bevorzugt, ebenso Amine, die mehrere Aminogruppen unterschiedlichen Typs enthalten (z. B. gemischte tertiäre/sekundäre Amine) und quaternäre Ammoniumsalze. Diese Aminkatalysatoren können entweder Mono- oder Polyamine sein. Wenn primäre und sekundäre Amine benutzt werden, sind Monoamine bevorzugt. Die folgenden Verbindungen sind Beispiele für Aminkatalysatoren.

Diethylamin, Tripropylamin, Tributylamin, Triethylamin, Triamylamin, Benzylamin, Tetramethyldiaminodiphenylmethan, N,N-Diisobutylaminoacetonitril, N,N-Dibutylaminoacetonitril, heterocyclische Basen, wie Chinolin, N-Methylpyrrolidin, Imidazol, Benzimidazol und ihre Homologen, und auch Mercaptobenzothiazol. Beispiele geeigneter quaternärer Ammoniumverbindungen sind Benzyltrimethylammoniumhydroxid und Benzyltrimethylammoniummethoxid. Tripropylamin wird bevorzugt.

Weitere geeignete ionische Katalysatoren sind Alkalimetallverbindungen, wie z. B Alkalimetallalkoholate und Alkalimetallhydroxide. Naritummethylat ist besonders geeignet.

Geeignete Katalysatoren für die radikalische Polymerisation sind die bekannten organischen Peroxide und Hydroperoxide sowie Azoisobutyronitril. In diesem Fall liegt die bevorzugte Konzentration bei 0,1 bis 5 Gewichtsprozent.

Weitere Katalysatoren, die erfindungsgemäss eingesetzt werden können, sind Acetylacetonate, insbesondere Acetylacetonate von Übergangsmetallen. Die entsprechende Vanadiumverbindung soll besonders herausgestrichen werden. Diese speziellen Polymerisationskatalysatoren werden ebenfalls in den oben genannten Mengen verwandt.

Phenothiazin ist ein besonders guter Inhibitor. Weiterhin sind C-substituierte Phenothiazine, die einen oder bis zu drei Substituenten aufweisen, ausgewählt aus der Gruppe bestehend aus C₁-C₆-Alkyl, Aryl, insbesondere mit 6 bis 10 C-Atomen, olefinischen Substituenten, bevorzugt mit 2 bis 6 Kohlenstoffatomen, Halogen, sauerstoff-, stickstoff- und schwefelfunktionellen Gruppen, und N-substituierte Phenothiazine, die einen der vorgenannten Substituenten aufweisen, insbesondere einen Substituenten, ausgewählt aus der Gruppe bestehend aus C₁-C₆-Alkyl, z. B. 3-Methyl-phenothiazin, 3-Ethyl-phenothiazin, 10-Methyl-phenothiazin; Aryl, z. B. 3-Phenyl-phenothiazin, 3,7-Diphenyl-phenothiazin; Halogen wie Chlor, Brom und Iod, z B. 3-Chlorophenothiazin, 2-Chlorophenothiazin, 3-Bromophenothiazin; stickstofffunktionellen Gruppen, z. B. 3-Nitrophenothiazin, 3-Aminophenothiazin, 3,7-Diaminophenothiazin; und schwefelfunktionellen Gruppen, z. B. 3-Sulfonyl-phenothiazin, 3,7-Disulfonyl-phenothiazin, 3,7-Dithiocyanatophenthiazin, nützliche Inhibitoren gemäss der Erfindung. Ausserdem sind N,N'-Dimere von Phenothiazin und subsitutierte N,N'-Dimere von Phenothiazin auch nützliche Inhibitoren für die Erfindung. Bevorzugte Phenothiazine enthalten von 0 bis zu 1 Substituenten.

Phenothiazin oder diese Derivate von Phenothiazin sind in den erfindungsgemässen Zusammensetzungen bevorzugt in einer Menge von 0,5 bis zu 10, insbesondere von 0,5 bis zu 2 Gewichtsprozent enthalten.

Bevorzugt sind weiterhin diejenigen erfindungsgemässen Zusammensetzungen, die in einem nicht-wässerigen Lösungsmittel gelöst ist. Eine grosse Zahl von Lösungsmitteln niedrigen Kochpunkts (Kochpunkt bis zu ca. 160 °C, bevorzugt bis zu ca. 100 °C) können verwandt werden, z. B. Ketone, wie Aceton, Methylethylketon oder Methylisobutylketon; Glycolether und Glycoletheracetate, wie Propylenglycolmethylether, Propylenglycolmethyletheracetat, Ethylenglycolmethylether, Ethylenglycolethylether und das entsprechende Acetat; Kohlenwasserstoffe, wie Toluol und Anisol; Methoxypropanol; Dimethylformamid und Gemische aus den genannten Lösungsmitteln, wobei Keton- und Keton/Ether-Gemische (bevorzugt im Verhältnis 1:1) von besonderem Interesse sind. Mischungen von Ketonen mit Lösungsmitteln höheren Kochpunkts sind ebenfalls einsetzbar.

Die erfindungsgemässen brandgeschützten Polyimidzusammensetzungen können ausserdem zu jedem beliebigen Zeitpunkt vor der Härtung mit üblichen Modifizierungsmitteln vermischt werden, wie Extendern, Füllstoffen, Verstärkungsmitteln, Pigmenten, Farbstoffen, organischen Lösungsmitteln, Weichmachern, Haftmitteln, Kautschuken, Beschleunigern, Verdünnungsmitteln u.s.w.. Als geeignete Extender, Verstärkungsmittel, Füllstoffe und Pigmente seien z. B. angeführt (Stein)kohlenteer, Bitumen, Glas-, Bor- und Kohlefasern, Cellulose, Polyethylenpulver, Polypropylenpulver, Glimmer, Asbest, Quarzpulver, Gips, Antimontrioxid, Bentone, feinteiliges SiO₂ (Aerosil®), Lithophone, Baryt, Titandioxid, Kohlenstaub, Graphit oder Eisenpulver. Es ist auch möglich, andere übliche Zusatzstoffe zuzugeben, z. B. Thixotropiermittel, Fluss- und Verlaufsmittel, z. B. Silikone, Celluloseacetatbutyrat, Polyvinylbutyrat, Wachse, Stearate (die teilweise auch als Entformungshilfen verwendet werden) und so fort.

Die brandgeschützten Polyimidzusammensetzungen sind z. B. geeignet zur Herstellung von Schaltungsplatinen, Giessmassen, Verbund- bzw. Compositematerialien, Pressmassen, Klebstoffen oder Beschichtungsmitteln. Besonders geeignet sind die erfindungsgemässen Zusammensetzungen zur Herstellung von Prepregs für oben erwähnte Anwendungen.

Die Herstellungmethode von Prepregs ist daran orientiert, dass Prepolymere vorbestimmten (nicht vollständigen) Härtungsgrades erhalten werden. Ein Schlüsselelement ist die Menge an Katalysator, die hierbei angewandt wird. Die anwendbaren Katalysatorkonzentrationen wurden oben bereits angeführt. Bei der Wahl der Reaktionsbedingungen muss der Fachmann die jeweils gewünschte Balance zwischen Katalysatorkonzentration und anderen Verfahrensparametern suchen. Dabei können auch Konzentrationen, die etwas niedriger oder höher als die weiter oben hierfür angegebenen Grenzkonzentrationen sind, noch geeignet sein. Allerdings führen Katalysatorkonzentrationen, die erheblich unter dem Minimalwert liegen, zu keiner besseren Lösungs- oder Lagerstabilität, während erheblich höhere Konzentrationen zum Gelieren der Lösung während der Herstellung führen können, oder aber zu Lösungen mit hoher Viskosität und zu schlechteren mechanischen und thermischen Eigenschaften der Produkte.

Entsprechend ist der Grad des Härtungsfortschrittes in der Masse eine Funktion der Reaktionszeit und der Temperatur nach der Katalysatorzugabe. Er kann mit Hilfe von Viskositätsmessungen an den Harzschmelzen überwacht werden. Die Schmelzviskosität wird z. B. mit einem ICI Cone & Plate Viskosimeter gemessen werden, unter Verwendung einer 0 - 10 Pa·s-Skala (entsprechend 0 - 100 Poise) bei 125 °C. Sie liegt dann im allgemeinen in einem Bereich von 2 bis 8,5 Pa·s (20 - 85 Poise), bevorzugt von 5 bis 7 Pa·s (50 bis 70 Poise), für die vorgehärteten Harzsysteme. Die Gelierzeit kann als zusätzlicher Parameter benutzt werden und gibt hier die Zeit zur völligen Gelierung bei einer Temperatur von 170 °C an. Sie liegt im allgemeinen bei Werten von 80 bis 550 Sekunden für die vorgehärteten Systeme.

Das Vorhärtungsverfahren umfasst das Mischen von Bismaleinimid, Tribromphenyl-maleinimid und Alkenylphenol bzw. Alkenylphenolether und das Erwärmen der Mischung auf Temperaturen im Bereich von 25 bis 125 °C, bis eine klare Schmelze erhalten wird. Danach wird der Katalysator zugegeben und die Reaktion für einen geeigneten Zeitraum bei Temperaturen von 110 bis 130 °C fortgesetzt. Danach wird das Phenothiazin in einer den obigen Angaben entsprechenden Menge im gewünschten Lösungsmittelsystem aufgelöst und zum Harz zugegeben. Auf diese Weise werden Lösungen hohen Feststoffgehaltes (bis zu ca. 75 Gewichtsprozent, bevorzugt bei ca. 60 Gewichtsprozent) und im allgemeinen niedriger Viskosität erhalten, die direkt zur Laminatherstellung durch Imprägnierung von Fasern oder Geweben aus Glas oder anderen Materialien verwendet werden können.

Prepolymere, wie die oben beschriebenen, können in vielfacher Weise verwandt werden, z. B. bei der Herstellung von Platinen, Giessmassen, Verbundmaterialien, Pressmassen, Klebstoffen und Beschichtungsmassen. So werden die erfindungsgemässen Harzzusammensetzungen, entweder als Lösung oder als Schmelze, zur Imprägnierung verschiedener Faser- oder Gewebematerialien verwandt werden, z. B. bei der Herstellung von Schaltungsplatinen oder anderen Laminatanwendungen. Verfahren zur Herstellung von Laminaten sind allgemein bekannt. Solche Laminate können z. B. durch Schmelzen unter Druck hergestellt werden und Stärken eines grossen Bereichs aufweisen. Verfahren zur Herstellung von Prepregs sind dem Fachmann ebenfalls gut bekannt. Zur Herstellung von Platten mit Bienenwabenstruktur (honeycomb skins) und entsprechenden anderen Bauteilen sowie graphit-, glass- und kevlar®-verstärkten und anderen Materialien können die vorliegenden Harzsystem ohne weiters eingesetz werden.

Gemäss einer bevorzugten Ausführungsform wird die Polyimidlösung (ca. 60 % Feststoffgehalt) mit einem geeigneten Lösungsmittel verdünnt, bis eine Viskosität im gewünschten Bereich vorliegt. Ein Glassgewebe mit geeignetem Haftmittel wird in die Harzlösung getaucht, um das Gewebe damit zu impägnieren. Das Gewebe wird danach in einem Ofen auf 150 bis 170 °C erhitzt, um die flüchtigen Lösungsmittel zu vertreiben und den gewünschten Reaktivitätsgrad zu erhalten. Prepregs dieser Art werden danach z. B. bei etwa 177 °C drei Stunden lang verpresst und vier Stunden bei 240 °C nachgehärtet, um das endgültige Laminatmaterial zu ergeben.

Die Prepolymere können weiterhin zu jedem Zeitpunkt vor der endgültigen Härtung gemischt oder mit üblichen Additiven oder Modifizierungsmittels versetzt werden.

Die erfindungsgemässen warmhärtbaren Zusammensetzungen ergeben Prepregs, die bei Raumtemperatur ohne nachteilige Effekte gelagert werden können und ergeben verbesserte Auftrags- und Verarbeitungseigenschaften.

Dementsprechend betrifft die Erfindung auch das Produkt erhältlich aus einer Zusammensetzung, wie oben beschrieben, durch Entfernen des Lösungsmittels und Härten der hierbei erhaltenen im wesentlichen lösungsmittelfreien Mischung sowie Laminate oder Prepregs umfassend das gehärtete Produkt eines Gewebes oder gesponnenen Garns, das mit einer der beschriebenen Zusammensetzungen imprägniert wurde.

Weiterhin hat die Erfindung ein Verfahren zur Herstellung eines Prepregs auf Basis von Imiden zum Gegenstand, umfassend
1) die Reaktion von
   a) einem Polyimid enthaltend zumindest zwei Reste der Formel 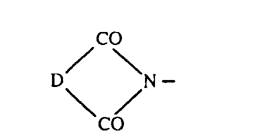 worin D eine zweiwertige Gruppe enthaltend eine C=C-Bindung ist,
   (b) 0,05 to 2,0 Mol pro Mol der Komponente (a) eines Alkenylphenols, eines Alkenylphenolethers oder Gemischen davon und
   (c) Tribromphenyl-maleinimid
   bei erhöhter Temperatur in Gegenwart eines Katalysators für die ionische oder radikalische Polymerisation und für einen Zeitraum, der ausreichend ist, dem Reaktionsprodukt eine Schmelzviskosität von 2 bis 8,5 Pa·s (20 - 85 Poise), gemessen mit einem ICI Cone and Plate Viscometer bei 125 °C zu verleihen;
2) die Zugabe von Phenothiazin oder eines Derivates davon, und zwar in einer Menge Lösungsmittel, dass sich ein Feststoffgehalt zwischen 40 und 60 Gewichtsprozent ergibt;
3) das Imprägnieren von mit einem geeigneten Haftungsvermittler vorbehandelten Glasfasern mit dieser Harzlösung; und
4) das Erhitzen des Gewebes auf eine Temperatur von 150 bis 170 °C, um das Lösungsmittel aus dem Prepreg zu entfernen.

Eine spezielle Ausführungsform stellt ein derartiges Verfahren dar, wobei das Polyimid (a) 4,4'-Diphenylmethan-bismaleinimid, die Komponente (b) O,O'-Diallyl-bisphenol-A und der Katalysator Tripropylamin ist, ebenso wie ein entsprechendes Verfahren, wobei das Lösungsmittel ein Keton, ein Glycolether, ein Glycoletheracetat, ein Kohlenwasserstoff, Methoxypropanol, Dimethylformamid oder ein Gemisch davon ist und einen Kochpunkt von höchstens 160 °C hat.

Schliesslich betrifft die Erfindung noch die Verwendung der erfindungsgemässen Zusammensetzungen zur Herstellung von Prepolymeren für die Herstellung von Platinen, Giessmassen, Verbundmaterialien, Pressmassen, Klebstoffen und Beschichtungsmassen.

### Beispiel 1:

| Komponente | Gewichtsteile |
|---|---|
| XU 292A (Bismaleimidodiphenylmethan) (from CIBA-GEIGY Corporation, Ardsley, NY) | 28,93 |
| | |
| XU 292B (Diallyl-bisphenol-A) (from CIBA-GEIGY Corporation, Ardsley, NY) | 24,84 |
| | |
| FR 1033 (Tribromphenyl-maleinimid) | 5,97 |
| | |
| Tripropylamin | 0,38 |
| | |
| Phenothiazin | 0,98 |
| | |
| Methylethylketon | 19,46 |
| | |
| Dowanol® PM (Methoxypropanol) (from Dow Chemical Company, Midland, Michigan) | 19,46 |

Diallyl-bisphenol-A wird in einen Reaktionskolben mit Rührer, Kühler und einer weiteren Öffnung gegeben und unter Rühren auf 120°C erwärmt. Unter Rühren werden Bismaleinimidodiphenylmethan und Tribromphenyl-maleinimid zugegeben. Nachdem die Materialien sorgfältig vermischt sind, wird das Reaktionsgefäss 30 Minuten unter Vakuum (≤ 50 mm/Hg) gesetzt. Eine Probe wird entnommen und Viskosität und Gelierzeit bestimmt. Wenn die Gelierzeit 500-700 Sekunden bei 171 °C und die Viskosität weniger als 1 Pa·s (10 Poise) bei 100°C (gemessen auf einem ICI-Viscometer) beträgt, wird die Reaktionsmischung auf 110°C abgekühlt, Tripropylamin zugegeben und weitere 30 Minuten gerührt. Danach wird die Reaktionmischung 1 Stunde unter Vakuum gehalten, die Temperatur wird danach auf 120°C erhöht und 30 Minuten auf diesem Wert gehalten.

Das Vakuum wird entfernt und erneut werden Viskosität und Gelierzeit gemessen. Das Reaktionsgemisch wird gerührt und auf 120 °C gehalten, bis die Gelierzeit 150-250 Sekunden bei 171 °C und die Viscosität 4 bis 6 Pa·s (40-60 Poise) bei 125°C ist. Das Methylethylketon wird zugegeben und die Heizapparatur entfernt. Das Reaktionsgemisch wird auf ≤ 50°C abkühlen lassen, wonach das Phenothiazin und Methoxypropanol zugegeben werden. Unter Rühren wird danach auf Raumtemperatur abkühlen lassen. Die erhaltenen Lösung wird aus dem Kolben entfernt und durch ein 10 Mikron-Filter filtriert.

### Beispiel 2:

| Komponente | Gewichtsteile |
|---|---|
| XU 292A (Bismaleimidodiphenylmethan) (from CIBA-GEIGY Corporation, Ardsley, NY) | 31,88 |
| | |
| XU 292B (Diallyl-bisphenol-A) (from CIBA-GEIGY Corporation, Ardsley, NY) | 27,30 |
| | |
| Tripropylamin | 0,38 |
| | |
| Phenothiazin | 0,99 |
| | |
| Methylethylketon | 19,73 |
| | |
| Dowanol® PM (Methoxypropanol) (from Dow Chemical Company, Midland, Michigan) | 19,73 |

Das Bismaleinimidodiphenylmethan und Diallyl-bisphenol-A werden in einen Reaktionskolben gegeben, vermischt und auf 120 bis 135 °C erwärmt. Tripropylamin wird zugegeben und zwei Stunden lang weitergerührt. Proben werden entnommen und Viskosität der Probenschmelze bei 125 °C sowie die Gelierzeit bei 171 °C bestimmt. Wenn die Schmelzviskosität 4 Pa·s (40 Poise) erreicht, wird Methylethylketon, Methoxypropanol und Phenothiazin dem Gemisch im Kolben zugesetzt und weitere 2 bis 4 Stunden gerührt. Das erhaltene Produkt hat einen Feststoffgehalt von 60 Gewichtsprozent, eine Gelierzeit von 340 Sekunden bei 171 °C und eine Viskosität von 300 cps bei 25 °C.

### Beispiel 3:

Mit Hilfe der gemäss den Beispielen 1 und 2 erhaltenen Harzlösungen werden Prepregs hergestellt, indem man zunächst ein Glasgewebe damit imprägniert und das Material 3 Minuten auf 190 °C erhitzt. Auf diese Weise erhaltene Prepregs werden bei 177 °C drei Stunden lang verpresst und danach bei 240 °C vier Stunden nachgehärtet. Das fertiggestellte Laminat wird danach auf seine thermischen und Brandschutzeigenschaften getestet. Die Brandschutzeigenschaften wurden getestet gemäss der Vorschrift von Underwriters Laboratory für die UL 94 V1 und VO Klassifizierung. Hierzu wurden 5 Laminatproben einer offenen Flamme ausgesetzt und bestimmt, wie lange sie im Durchschnitt brennen.

| Eigenschaft | Beispiel 1 | Beispiel 2 |
|---|---|---|
| Aufbau des Laminats (Zahl der Schichten/Glasgewebeart v. Clark Schwebel) | 8/2116 | 8/2116 |
| | | |
| Harzgehalt | 50 Gew.-% | 50 Gew.-% |
| | | |
| Glasübergangstemperatur | 250 °C | 250 °C |
| | | |
| Zersetzungstemperatur | 400 °C | 410 °C |
| | | |
| Durchschnittliche Brenndauer | 3.7 s | 24,0 s |
| | | |
| UL 94-Klasse | VO | V1 |

Vergleichbare Zusammensetzungen mit anderen Brandschutzmitteln als Tribromphenyl-maleinimid ergeben ebenfalls entweder eine längere Brenndauer oder weisen wesentlich schlechtere thermische Eigenschaften auf, wie z. B. niedrigere Glasübergangs- oder auch Zersetzungstemperatur.

## Patentansprüche

1. Polyimidzusammensetzung enthaltend:
(A) das Reaktionsprodukt von
(a) einem Polyimid enthaltend zumindest zwei Reste der Formel 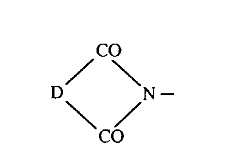 worin D ein zweiwertiger Rest mit einer Kohlenstoff-Kohlenstoff-Doppelbindung ist,
(b) 0,05 to 2,0 Mol pro Mol der Komponente (a) eines Alkenylphenols, eines Alkenylphenolethers oder von Gemischen der beiden und
(c) Tribromphenyl-maleinimid;
(B) einen Katalysator für die ionische oder radikalische Polymerisation und
(C) Phenothiazin oder ein Derivat davon, ausgewählt aus C-substituierten Phenothiazinen, die einen oder bis zu drei Substituenten aufweisen, ihrerseits ausgewählt aus der Gruppe bestehend aus C₁-C₆-Alkyl, Aryl, olefinischen Substituenten, Halogen, sauerstoff-, stickstoff- und schwefelfunktionellen Gruppen, und N-substituierten Phenothiazinen, die einen Substituenten aufweisen, der aus der Gruppe bestehend aus C₁-C₆-Alkyl, Aryl, olefinischen Substituenten, Halogen, sauerstoff-, stickstoff- und schwefelfunktionellen Gruppen ausgewählt ist, sowie N,N'-Dimeren von Phenothiazin und substituierten N,N'-Dimeren von Phenothiazin.

2. Zusammensetzung nach Anspruch 1, wobei die Komponente (a) die Formel 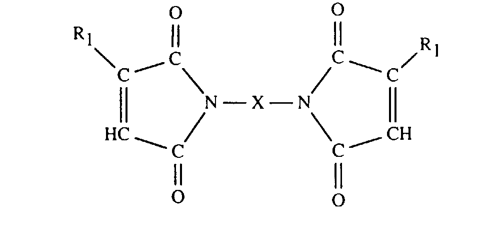 aufweist, worin R₁ Wasserstoff oder Methyl und X ein zweiwertiger organischer Rest mit 2-30 Kohlenstoffatomen ist.

3. Zusammensetzung nach Anspruch 2, wobei X -CₓH₂ₓ- mit x=2-20, -CH₂CH₂SCH₂CH₂-, Phenylen, Naphthylen, Xylylen, Cyclopentylen, 1,5,5-Trimethyl-1,3-cyclohexylen, 1,4-Cyclohexylen, 1,4-Bis(methylen)-cyclohexylen oder eine Gruppe der Formel 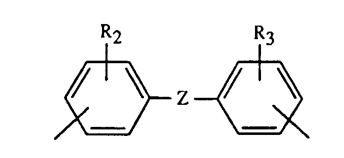 ist, worin R₂ und R₃ unabhängig voneinander Chlor, Brom, Methyl, Ethyl oder Wasserstoff bedeuten und Z eine direkte Bindung oder Methylen, 2,2-Propyliden, -CO-, -O-, -S-, -SO- oder -SO₂- bedeutet.

4. Zusammensetzung nach Anspruch 3, worin die Komponente (a) die Formel 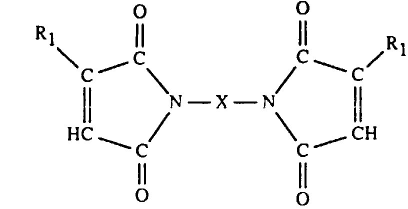 aufweist, worin R₁ Wasserstoff und X eine Gruppe der Formel 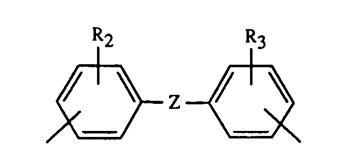 ist, worin Z Methylen, 2,2-Propyliden oder -O- bedeutet.

5. Zusammensetzung nach Anspruch 4, worin die Komponente (a) N,N'-4,4'-Diphenylmethan-bismaleinimid ist.

6. Zusammensetzung nach Anspruch 1, worin die Komponente (b) einem Alkenylphenol Formel II entspricht 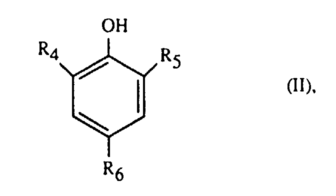 worin R₄, R₅ und R₆ jedes unabhängig voneinander Wasserstoff oder C₂-C₁₀-Alkenyl bedeuten, jedoch mindestens eine Gruppe von R₄ bis R₆ eine Alkenylgruppe ist; oder einem Alkenylphenol der Formel III 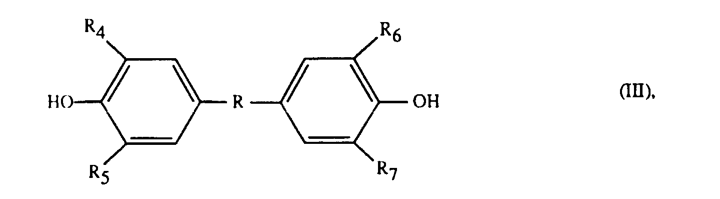 worin R eine direkte Bindung, Methylen, Isopropyliden, -O-, -S-, -SO-, oder -SO₂- und R₄, R₅, R₆ und R₇ jedes unabhängig voneinander Wasserstoff oder C₂-C₁₀-Alkenyl bedeuten, jedoch mindestens eine Gruppe von R₄ bis R₇ eine Alkenylgruppe ist; oder einem Alkenylphenol der Formel IV 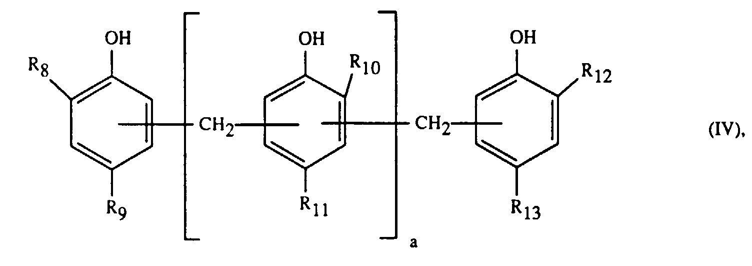 worin R₈, R₉, R₁₀, R₁₁, R₁₂ und R₁₃ jedes unabhängig voneinander Wasserstoff, C₁-C₄-Alkyl oder C₂-C₁₀-Alkenyl bedeuten, jedoch mindestens eine Gruppe von R₈ bis R₁₃ eine Alkenylgruppe ist, und a einen Wert von 0 bis 10 hat,
oder einem Ether der genannten Alkenylphenole, der eine oder mehrere Reste der Formel V aufweist
-O-R₃ (V)
in der R₃ eine Alkylgruppe mit 1 bis 10 C-Atomen, eine Arylgruppe oder eine Alkenylgruppe bedeutet und das O-Atom in Formel V die phenolische Etherbrücke repräsentiert.

7. Zusammensetzung nach Anspruch 6, wobei die Alkenylphenole oder Ether der Alkenylphenole als Alkenylgruppen Allyl- oder Propenylgruppen aufweisen.

8. Zusammensetzung nach Anspruch 7, wobei das Alkenylphenol O,O'-Diallyl-bisphenol-A ist.

9. Zusammensetzung nach Anspruch 1, worin das Tribromphenyl-maleinimid in einer Konzentration von 1 bis 25 Gewichtsprozent, bezogen auf das Gesamtgewicht der Komponente (a) enthalten ist.

10. Zusammensetzung nach Anspruch 9, worin das Tribromphenyl-maleinimid in einer Konzentration von 8 bis 15 Gewichtsprozent, bezogen auf das Gesamtgewicht der Komponente (a) enthalten ist.

11. Zusammensetzung nach Anspruch 1, die in einem nicht-wässerigen Lösungsmittel gelöst ist.

12. Zusammensetzung nach Anspruch 11, bei der das Lösungsmittel ein Keton, ein Glycolether, ein Glycoletheracetat, ein Kohlenwasserstoff, Methoxypropanol, Dimethylformamid oder ein Gemisch daraus ist und das Lösungsmittel einen Kochpunkt von höchstens etwa 160 °C hat.

13. Zusammensetzung nach Anspruch 1, die ein Phenothiazinderivat enthält, ausgewählt aus C-substituierten Phenothiazinen, die einen oder bis zu drei Substituenten aufweisen, ihrerseits ausgewählt aus der Gruppe bestehend aus C₁-C₆-Alkyl, Aryl, olefinischen Substituenten, Halogen, sauerstoff-, stickstoff- und schwefelfunktionellen Gruppen, und N-substituierten Phenothiazinen, die einen Substituenten aufweisen, der aus der Gruppe bestehend aus C₁-C₆-Alkyl, Aryl, olefinischen Substituenten, Halogen, sauerstoff-, stickstoff- und schwefelfunktionellen Gruppen ausgewählt ist, sowie N,N'-Dimeren von Phenothiazin und subsitutierten N,N'-Dimeren von Phenothiazin.

14. Zusammensetzung nach Anspruch 1, die als Komponente (C) Phenothiazin enthält.

15. Zusammensetzung nach Anspruch 1, die Phenothiazin oder Derivate von Phenothiazin in einer Menge von 0,5 bis zu 10, bevorzugt von 0,5 bis zu 2 Gewichtsprozent enthält.

16. Das Produkt erhältlich aus einer Zusammensetzung gemäss Anspruch 11 durch Entfernen des Lösungsmittels und Härten der hierbei erhaltenen im wesentlichen lösungsmittelfreien Mischung.

17. Laminat oder Prepreg umfassend das gehärtete Produkt eines Gewebes oder gesponnenen Garns, das mit einer Zusammensetzung gemäss Anspruch 11 imprägniert wurde.

18. Verfahren zur Herstellung eines Prepregs auf Basis von Imiden, umfassend
1) die Reaktion von
a) einem Polyimid enthaltend zumindest zwei Reste der Formel 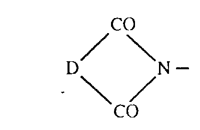 worin D eine zweiwertige Gruppe enthaltend eine C=C-Bindung ist,
(b) 0,05 to 2,0 Mol pro Mol der Komponente (a) eines Alkenylphenols, eines Alkenylphenolethers oder Gemischen davon und
(c) Tribromphenyl-maleinimid
bei erhöhter Temperatur in Gegenwart eines Katalysators für die ionische oder radikalische Polymerisation und für einen Zeitraum, der ausreichend ist, dem Reaktionsprodukt eine Schmelzviskosität von 2 bis 8,5 Pa·s (20 - 85 Poise), gemessen mit einem ICI Cone and Plate Viscometer bei 125 °C zu verleihen;
2) die Zugabe von Phenothiazin oder eines Derivates davon, ausgewählt aus C-substituierten Phenothiazinen, die einen oder bis zu drei Substituenten aufweisen, ihrerseits ausgewählt aus der Gruppe bestehend aus C₁-C₆-Alkyl, Aryl, olefinischen Substituenten, Halogen, sauerstoff-, stickstoff- und schwefelfunktionellen Gruppen, und N-substituierten Phenothiazinen, die einen Substituenten aufweisen, der aus der Gruppe bestehend aus C₁-C₆-Alky-, Aryl, olefinischen Substituenten, Halogen, sauerstoff-, stickstoff- und schwefelfunktionellen Gruppen ausgewählt ist, sowie N,N'-Dimeren von Phenothiazin und subsitutierten N,N'-Dimeren von Phenothiazin, und zwar in einer Menge Lösungsmittel, dass sich ein Feststoffgehalt zwischen 40 und 60 Gewichtsprozent ergibt;
3) das Imprägnieren von mit einem geeigneten Haftungsvermittler vorbehandeltem Glasfasern, mit dieser Harzlösung; und
4) das Erhitzen des Gewebes auf eine Temperatur von 150 bis 170 °C, um das Lösungsmittel aus dem Prepreg zu entfernen.

19. Das Verfahren nach Anspruch 18, wobei das Polyimid (a)
4,4'-Diphenylmethan-bismaleinimid, die Komponente (b) O,O'-Diallyl-bisphenol-A und der Katalysator Tripropylamin ist.

20. Das Verfahren nach Anspruch 18, wobei das Lösungsmittel ein Keton, ein Glycolether, ein Glycoletheracetat, ein Kohlenwasserstoff, Methoxypropanol, Dimethylformamid oder ein Gemisch davon ist und einen Kochpunkt von höchstens 160 °C hat.

21. Verwendung von Zusammensetzungen nach Anspruch 1 zur Herstellung von Prepolymeren für die Herstellung von Platinen, Giessmassen, Verbundmaterialien, Pressmassen, Klebstoffen und Beschichtungsmassen.

## Claims

1. A polyimide composition comprising
(A) the reaction product of
(a) a polyimide containing at least two radicals of the formula 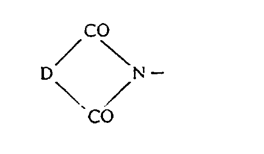 wherein D is a divalent radical containing a carbon-carbon double bond,
(b) from 0.05 to 2.0 mol per mole of component (a) of an alkenyl phenol, an alkenyl phenol ether or mixtures of the two, and
(c) tribromophenyl-maleimide;
(B) a catalyst for ionic or free-radical polymerization; and
(C) phenothiazine or a derivative thereof selected from the group consisting of C-substituted phenothiazines which have one or up to three substituents in turn selected from the group consisting of C₁-C₆ alkyl, aryl, olefinic substituents, halogen, oxygen functional groups, nitrogen functional groups and sulfur functional groups, and N-substituted phenothiazines which have one substituent selected from the group consisting of C₁-C₆ alkyl, aryl, olefinic substituents, halogen, oxygen functional groups, nitrogen functional groups and sulfur functional groups, and N,N' dimers of phenothiazine and substituted N,N' dimers of phenothiazine.

2. A composition according to claim 1, wherein component (a) has the formula 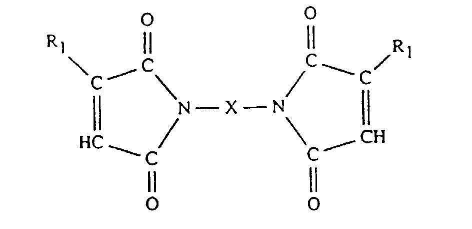 wherein R₁ is hydrogen or methyl and X is a divalent organic radical with 2-30 carbon atoms.

3. A composition according to claim 2, wherein X is -CₓH₂ₓ- with x=2-20, -CH₂CH₂SCH₂CH₂-, phenylene, naphthylene, xylylene, cyclopentylene, 1,5,5-trimethyl-1,3-cyclohexylene, 1,4-cyclohexylene, 1,4-bis(methylene) - cyclohexylene or a group of the formula 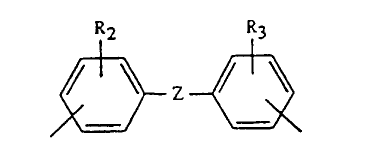 wherein R₂ and R₃ independently are chlorine, bromine, methyl, ethyl, or hydrogen and Z is a direct bond or methylene, 2,2-propylidene, -CO-,-O-,-S-,-SO- or -SO₂-.

4. A composition according to claim 3, wherein component (a) has the formula 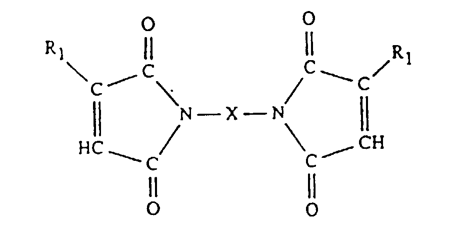 wherein R₁ is hydrogen and X is a group of the formula 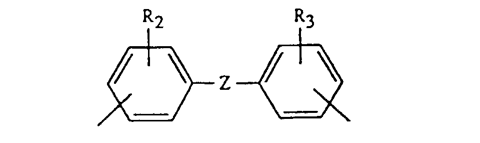 in which Z is methylene, 2,2-propylidene or -O-.

5. A composition according to claim 4, wherein component (a) is N,N'-4,4'-bismaleimidodiphenylmethane.

6. A composition according to claim 1, wherein component (b) is an alkenyl phenol of formula II 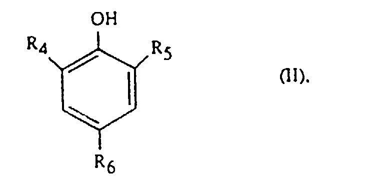 wherein R₄, R₅ and R₆ are each independently of each other hydrogen or C₂-C₁₀ alkenyl but at least one of R₄ to R₆ is an alkenyl group;
or an alkenyl phenol of the formula III 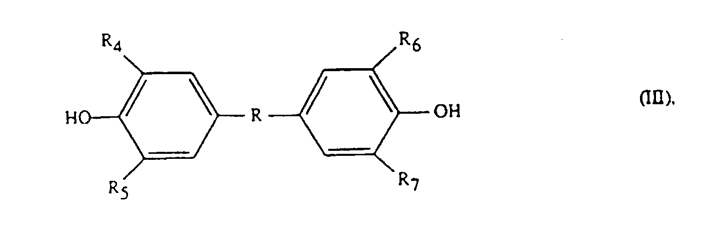 wherein R is a direct bond, methylene, isopropylidene, -O-,-S-,-SO- or -SO₂- and R₄, R₅, R₆ and R₇ are each independently hydrogen or C₂-C₁₀alkenyl but at least one of R₄ to R₇ is an alkenyl group;
or an alkenyl phenol of the formula IV 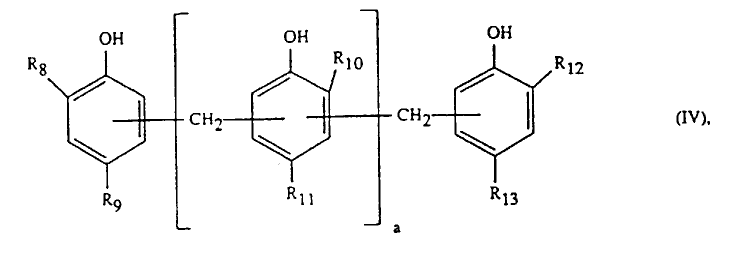 wherein R₈, R₉, R₁₀, R₁₁, R₁₂ and R₁₃ are each independently hydrogen, C₁-C₄alkyl or C₂-C₁₀alkenyl but at least one of R₈ to R₁₃ is an alkenyl group, and a is from 0 to 10;
or an ether of the said alkenyl phenols containing one or more radicals of the formula V
-O-R₃ (V)
in which R₃ is an alkyl group having 1 to 10 carbon atoms, an aryl or an alkenyl group and the O atom in formula V represents the phenolic ether bridge.

7. A composition according to claim 6, wherein the alkenyl phenols or ethers of the alkenyl phenols contain as alkenyl groups allyl or propenyl groups.

8. A composition according to claim 7, wherein the alkenyl phenol is O,O'-diallyl-bisphenol A.

9. A composition according to claim 1, wherein the tribromophenyl-maleimide is present in a concentration from 1 to 25% by weight based upon the total weight of component (a).

10. A composition according to claim 9, wherein the tribromophenyl-maleimide is present in a concentration of 8 to 15% by weight based upon the total weight of component (a).

11. A composition according to claim 1, which is dissolved in a non-aqueous solvent.

12. A composition according to claim 11, wherein the solvent is a ketone, a glycol ether, a glycol ether acetate, a hydrocarbon, methoxypropanol, dimethylformamide or a mixture thereof and the solvent has a maximum boiling point of about 160°C.

13. A composition according to claim 1, which comprises a phenothiazine derivative selected from C-substituted phenothiazines which have one or up to three substituents in turn selected from the group consisting of C₁-C₆ alkyl, aryl, olefinic substituents, halogen, oxygen functional groups, nitrogen functional groups and sulfur functional groups, and N-substituted phenothiazines which have one substituent selected from the group consisting of C₁-C₆ alkyl, aryl, olefinic substituents, halogen, oxygen functional groups, nitrogen functional groups and sulfur functional groups, and N,N' dimers of phenothiazine and substituted N,N' dimers of phenothiazine.

14. A composition according to claim 1, wherein component (C) is phenothiazine.

15. A composition according to claim 1, which comprises phenothiazine or derivatives of phenothiazine in an amount of 0.5 to 10, preferably 0.5 to 2% by weight.

16. A product obtainable from a composition according to claim 11 by removing the solvent and curing the resulting substantially solvent-free mixture.

17. A laminate or prepreg comprising the cured product of a woven fabric or spun yarn impregnated with a composition according to claim 11.

18. A process for preparing a prepreg based on imides, comprising
1) reacting at an elevated temperature
(a) a polyimide containing at least two radicals of the formula 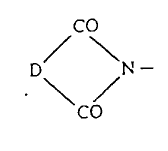 wherein D is a divalent radical containing a C=C bond,
(b) from 0.05 to 2.0 mol per mole of component (a) of an alkenyl phenol, an alkenyl phenol ether or mixtures thereof, and
(c) tribromophenyl-maleimide in the presence of a catalyst for ionic or free-radical polymerization for a period of time sufficient to provide the reaction product with a melt viscosity of from 2 to 8.5 Pa.s (20 - 85 poise) as measured with an ICI Cone and Plate Viscometer at 125°C;
2) adding phenothiazine or a derivative thereof selected from C-substituted phenothiazines which have one or up to three substituents in turn selected from the group consisting of C₁-C₆ alkyl, aryl, olefinic substituents, halogen, oxygen functional groups, nitrogen functional groups and sulfur functional groups, and N-substituted phenothiazines which have one substituent selected from the group consisting of C₁-C₆ alkyl, aryl, olefinic substituents, halogen, oxygen functional groups, nitrogen functional groups and sulfur functional groups, and N,N' dimers of phenothiazine and substituted N,N' dimers of phenothiazine in sufficient solvent to provide a solids content of between 40 and 60% by weight;
3) impregnating glass fibres pretreated with an appropriate adhesion promoter with this resin solution; and
4) heating the fabric to 150-170°C to remove the solvent from the prepreg.

19. The process according to claim 18, wherein the polyimide (a) is 4,4'-bismaleimidodiphenylmethane, component (b) is O,O'-diallylbisphenol A and the catalyst is tripropylamine.

20. The process according to claim 18, wherein the solvent is a ketone, a glycol ether, a glycol ether acetate, a hydrocarbon, methoxypropanol, dimethylformamide or a mixture thereof and has a maximum boiling point of 160°C.

21. The use of compositions according to claim 1 for preparing prepolymers for the production of circuit boards, casting compounds, composite materials, compression moulding compounds, adhesives and coating compositions.

## Revendications

1. Composition de polyimide, contenant
(A) le produit de la réaction
(a) d'un polyimide contenant au moins deux résidus de formule 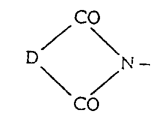 où D est un radical divalent ayant une double liaison carbone-carbone,
(b) de 0,05 à 2,0 moles par mole du constituant (a) d'un alcénylphénol, d'un alcénylphénol-éther ou de mélange des deux, et
(c) de tribromophényl-maléimide ;
(B) un catalyseur pour la polymérisation ionique ou radicalaire, et
(C) de la phénothiazine ou l'un de ses dérivés, choisi parmi les phénothiazines C-substituées, qui comportent un ou jusqu'à trois substituants, qui pour leur part sont choisis dans l'ensemble constitué des groupes alkyle en C₁-C₆, aryle, des substituants oléfiniques, des groupes halogéno, des groupes à fonctionnalité oxygène, azote et soufre, et les phénothiazines N-substituées, qui comportent un substituant choisi parmi l'ensemble constitué des groupes alkyle en C₁-C₆, aryle, les substituants oléfiniques, les groupes halogéno, les groupes à fonctionnalité oxygène, azote et soufre, ainsi les N,N'-dimères de la phénothiazine et les N,N'-dimères substitués de la phénothiazine.

2. Composition selon la revendication 1, dans laquelle le constituant (a) a la formule 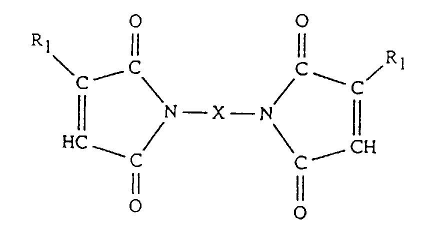 dans laquelle R₁ est un hydrogène ou le groupe méthyle, et X est un résidu organique ayant de 2 à 30 atomes de carbone.

3. Composition selon la revendication 2, dans laquelle X est -CₓH₂ₓ- avec x = 2-20, -CH₂CH₂SCH₂CH₂-, les groupes phénylène, naphtylène, xylylène, cyclopentylène, 1,5,5-triméthyl-1,3-cyclohexylène, 1,4-cyclohexylène, 1,4-bis(méthylène)-cyclohexylène ou un groupe de formule 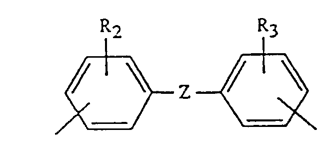 dans laquelle R₂ et R₃, indépendamment l'un de l'autre, sont chacun le groupe chloro, bromo, méthyle, éthyle ou un hydrogène, et Z est une liaison directe ou le groupe méthylène, 2,2-propylidène, -CO-, -O-, -S-, -SO- ou -SO₂-.

4. Composition selon la revendication 3, dans laquelle le constituant (a) a la formule suivante : 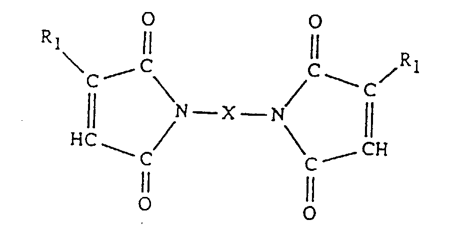 dans laquelle R₁ est un hydrogène et X est un groupe de formule 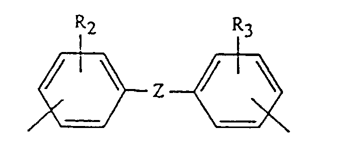 dans laquelle Z est le méthylène, le 2,2-propylidène ou -O-.

5. Composition selon la revendication 4, dans laquelle le constituant (a) est le N,N'-4,4'-diphényl-méthane-bismaléimide.

6. Composition selon la revendication 1, dans laquelle le constituant (b) correspond à un alcénylphénol de formule II 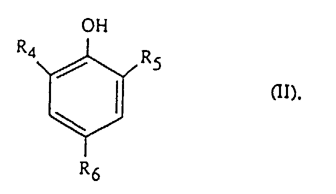 dans laquelle R₄, R₅ et R₆, indépendamment les uns des autres, sont chacun un hydrogène ou un groupe alcényle en C₂-C₁₀ mais au moins un groupe parmi les radicaux R₄ à R₆ est un groupe alcényle ;
ou à un alcénylphénol de formule III 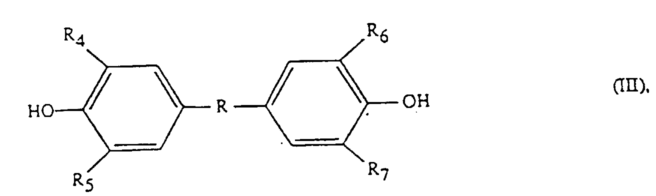 dans laquelle R est une liaison directe, le groupe méthylène, isopropylidène, -O-, -S-, -SO- ou -SO₂- et R₄, R₅, R₆ et R₇ représentent chacun indépendamment des autres un hydrogène ou un groupe alcényle en C₂-C₁₀ mais au moins un groupe parmi les radicaux R₄ à R₇ est un groupe alcé-nyle ;
ou à un alcénylphénol de formule IV 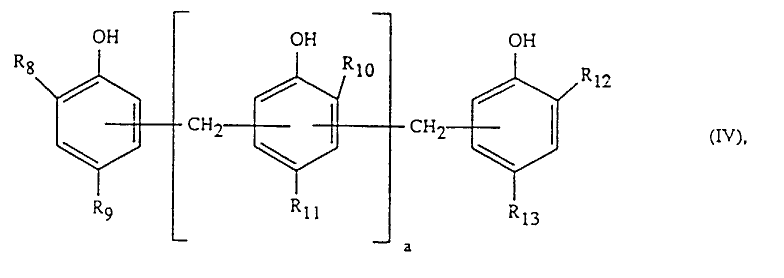 dans laquelle R₈, R₉, R₁₀, R₁₁, R₁₂ et R₁₃ représentent chacun indépendamment des autres un hydrogène ou un groupe alkyle en C₁-C₄ ou alcényle en C₂-C₁₀, mais au moins un groupe, parmi les radicaux R₈ à R₁₃, est un groupe alcényle, et a prend une valeur de 0 à 10,
ou encore à un éther des alcénylphénols ci-dessus, qui comporte un ou plusieurs résidus de formule V
-O-R₃ (V)
dans laquelle R₃ est un groupe alkyle ayant de 1 à 10 atomes de carbone, un groupe aryle ou un groupe alcényle, et l'atome d'oxygène de la formule IV représente le pont éther phénolique.

7. Composition selon la revendication 6, dans laquelle les alcénylphénols ou les éthers des alcénylphénols comportent, en tant que groupes alcényle, des groupes allyle ou propényle.

8. Composition selon la revendication 7, dans laquelle l'alcénylphénol est l'O,O'-diallyl-bisphénol A.

9. Composition selon la revendication 1, qui contient le tribromophényl-maléimide à une concentration de 1 à 25 % en poids par rapport au poids total du constituant (a).

10. Composition selon la revendication 9, dans laquelle le tribromophényl-maléimide est présent à une concentration de 8 à 15 % en poids par rapport au poids total du constituant (a).

11. Composition selon la revendication 1, qui est dissoute dans un solvant non-aqueux.

12. Composition selon la revendication 11, dans laquelle le solvant est une cétone, un glycoléther, un glycolétheracétate, un hydrocarbure, le méthoxypropanol, le diméthylformamide ou un de leurs mélanges, et le solvant a un point d'ébullition au plus égal à environ 160°C.

13. Composition selon la revendication 1, qui contient un dérivé de phénothiazine, choisi parmi les phénothiazines C-substituées, qui comportent un ou jusqu'à trois substituants, qui pour leur part sont choisis dans l'ensemble constitué des groupes alkyle en C₁-C₆, aryle, des substituants oléfiniques, des groupes halogéno, des groupes à fonctionnalité oxygène, azote et soufre, et les phénothiazines N-substituées, qui comportent un substituant choisi parmi l'ensemble constitué des groupes alkyle en C₁-C₆, aryle, les substituants oléfiniques, les groupes halogéno, les groupes à fonctionnalité oxygène, azote et soufre, ainsi les N,N'-dimères de la phénothiazine et les N,N'-dimères substitués de la phénothiazine.

14. Composition selon la revendication 1, qui contient en tant que constituant (c) la phénothiazine.

15. Composition selon la revendication 1, qui contient la phénothiazine ou les dérivés de la phénothiazine en une quantité de 0,5 à 10 et de préférence de 0,5 à 2 % en poids.

16. Produit pouvant être obtenu à partir d'une composition selon la revendication 11, par élimination du solvant et durcissement du mélange ainsi obtenu, essentiellement exempt de solvant.

17. Stratifié ou pré-imprégné comportant le produit durci d'un tissu ou d'un fil filé, qui a été imprégné d'une composition selon la revendication 11.

18. Procédé pour fabriquer un pré-imprégné à base d'imides, qui comprend :
1) la réaction
(a) d'un polyimide contenant au moins deux résidus de formule 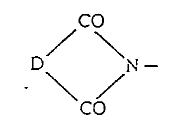 dans laquelle D est un groupe divalent contenant une liaison C=C,
(b) de 0,05 à 2,0 moles par mole du constituant (a) d'un alcénylphénol, d'un alcénylphénoléther ou de mélange de ceux-ci, et
(c) de tribromophényl-maléimide,
à haute température, en présence d'un catalyseur pour la polymérisation ionique ou radicalaire, et pendant un laps de temps suffisant pour conférer au produit de la réaction une viscosité en fusion de 2 à 8,5 Pa.s (de 20 à 85 poises), mesurée à 125°C avec un viscosimètre à cône et plaque ICI,
2) l'addition de phénothiazine ou d'un de ses dérivés, choisi parmi les phénothiazines C-substituées, qui comportent un ou jusqu'à trois substituants, qui pour leur part sont choisis dans l'ensemble constitué des groupes alkyle en C₁-C₆, aryle, des substituants oléfiniques, des groupes halogéno, des groupes à fonctionnalité oxygène, azote et soufre, et les phénothiazines N-substituées, qui comportent un substituant choisi parmi l'ensemble constitué des groupes alkyle en C₁-C₆, aryle, les substituants oléfiniques, les groupes halogéno, les groupes à fonctionnalité oxygène, azote et soufre, ainsi les N,N'-dimères de la phénothiazine et les N,N'-dimères substitués de la phénothiazine,
et plus précisément dans une quantité d'un solvant donnant une teneur en extrait sec comprise entre 40 et 60 % en poids ;
3) l'imprégnation, par cette solution de résine, de fibres de verre ayant subi un traitement préalable avec des promoteurs d'adhérence appropriés ; et
4) le chauffage du tissu à une température de 150 à 170°C pour chasser le solvant du pré-imprégné.

19. Procédé selon la revendication 18, dans lequel le polyimide (a) est le 4,4'-diphénylméthane-bismaléimide, le constituant (b) est l'O,O'-diallyl-bisphénol A et le catalyseur est la tripropylamine.

20. Procédé selon la revendication 18, dans lequel le solvant est une cétone, un glycoléther, un glycolétheracétate, un hydrocarbure, le méthoxypropanol, le diméthylformamide ou un de leurs mélanges, et a un point d'ébullition au plus égal à 160°C.

21. Utilisation de compositions selon la revendication 1 pour préparer des prépolymères destinés à la fabrication de platines, de matières à couler, de matériaux composites, de matières à mouler par compression, d'adhésifs et de compositions de revêtement.
